# EUROPEAN PATENT APPLICATION

(11) **EP 0 624 427 A1**
(43) Date of publication of application: **17.11.1994**
(21) Application number: 94201247.7
(22) Date of filing: 04.05.1994
(51) Int. Cl.: B23Q 5/04

(54) **Motor-driven movement and angular positioning assembly for toolholder headstocks**

(30) Priority: 14.05.1993 IT MI930982
(71) Applicant: H.S.D. s.r.l., I-20036 Meda, Milano (IT)
(72) Inventor: Marelli, Flavio, I-20036 Meda (Milano) (IT); Annoni, Giorgio, I-20036 Meda (Milano) (IT)
(74) Representative: Mittler, Enrico

(57) **Abstract**

A motor-driven movement and angular positioning assembly for toolholder headstocks comprises a shaft (1), driven by a respective motor, for the transmission of rotary motion to a tool (4) mounted on said toolholder headstock (5); a first assembly of mechanical elements (7,9), rotating integrally with said shaft (1), and a second assembly of mechanical elements (12,16,18), rotating integrally one with the other around the axis of rotation of the shaft (1), attached whereto is an eccentric shank (28) wherewith said headstock (5) is provided, comprise mechanical elements (9,12) which can be engaged mechanically one with the other, under the action of an actuator governed by a control unit, in order to exploit the rotary motion of the shaft (1) for transmitting circular motion to said shank (28) for angularly positioning said toolholder headstock (5). A braking element (20) is moreover provided and which can be engaged with the mechanical elements (12,16,18) of the second assembly to block their rotary motion during their disengaging from the mechanical elements (7,9) of the first assembly.

## Description

The object of the present invention is a movement and angular positioning assembly for toolholder headstocks, particularly but not exclusively for machines for the processing of wood.

Machine tools for the processing of wood are known wherein a tool, mounted on a toolholder headstock by means of a spindle, is made to rotate by a suitably motor-driven shaft, while the toolholder headstock is positioned angularly by means of a separate shaft which, via a pulley transmission or other moving part, drives rotation of the headstock.

In these machines, since two separate shafts are provided, two respective electronic units are required to control their motion, which entails constructional complications and higher production costs.

In view of the state of the art described, the object of the present invention is to provide a motor-driven assembly for a machine tool which, governed by a single electronic control unit, actuates both movement and angular positioning of a tool.

In accordance with the present invention, this object is achieved thanks to a motor-driven movement and angular positioning assembly for toolholder headstocks, comprising a shaft, actuated by a respective motor, for transmission of rotary motion to a tool mounted on said toolholder headstock, characterised in that it comprises a first assembly of mechanical elements rotating integrally with said shaft and a second assembly of mechanical elements rotating integrally one with the other around the rotation axis of the shaft, attached whereto is an eccentric shank wherewith said headstock is provided, the mechanical elements of said first and second assembly being engageable mechanically one with the other, under the action of an actuator governed by a control unit, in order to exploit the rotary motion of the shaft to transmit a circular motion to said shank for positioning said toolholder headstock angularly, a braking element also being provided and which can be engaged with the mechanical elements of said second assembly in order to block the rotary motion of the mechanical elements of said second assembly during their disengaging from the mechanical elements of said first assembly.

Thanks to the present invention, a machine tool can be built which only requires one electronic control unit for controlling the movement of the tool and that of the headstock which supports it. This simplifies the machine, and leads to a considerable saving in production and maintenance costs.

These and other features of the present invention will be made clearer in the following detailed description of one of its embodiments, illustrated by way of a non-limiting example in the accompanying drawings, in which:

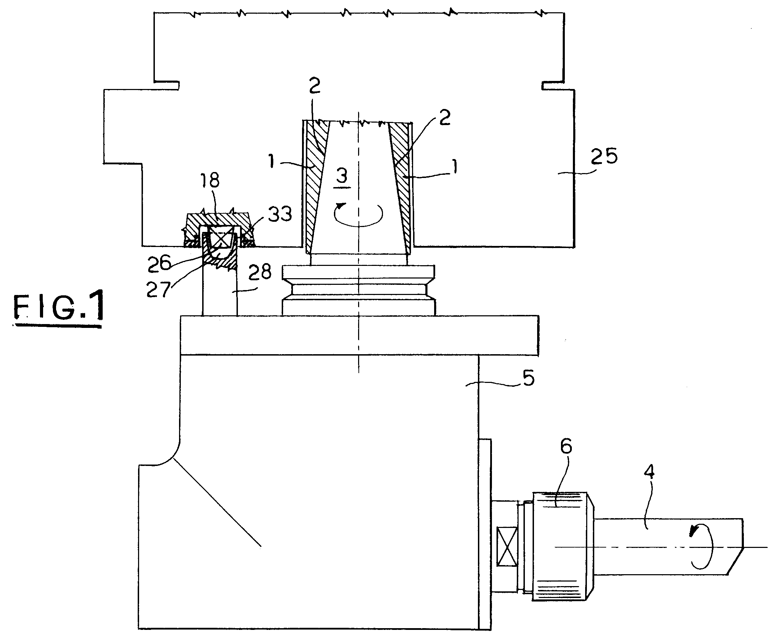

Figure 1 shows a partially sectioned side view of an assembly according to the invention, whereon a toolholder headstock is mounted;
Figure 2 is a section of the abovementioned assembly;
Figure 3 is a different section of said assembly, in conditions of angular positioning of the headstock.

With reference to the figures, a motor-driven assembly according to the invention comprises a drive shaft 1, actuated by a motor not shown in the drawings, provided with a terminal conical cavity 2 wherein a tapered shaft 3 is inserted and locked (by known means). The latter transmits the rotary motion to a tool 4 by means of a bevel gear pair (or other) situated inside a toolholder headstock 5, whereto the tool 4 is attached by means of a spindle 6.

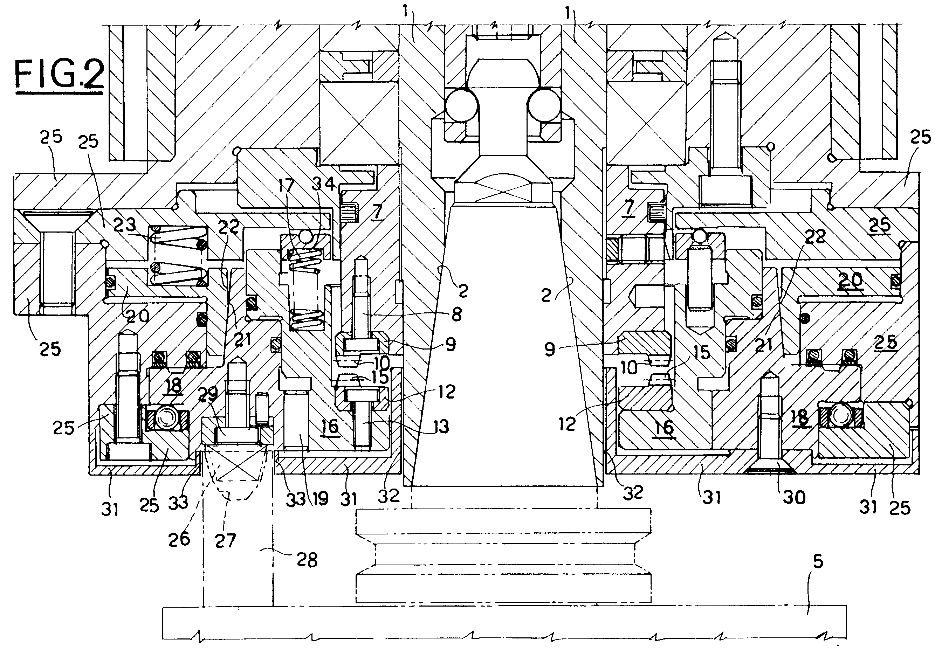

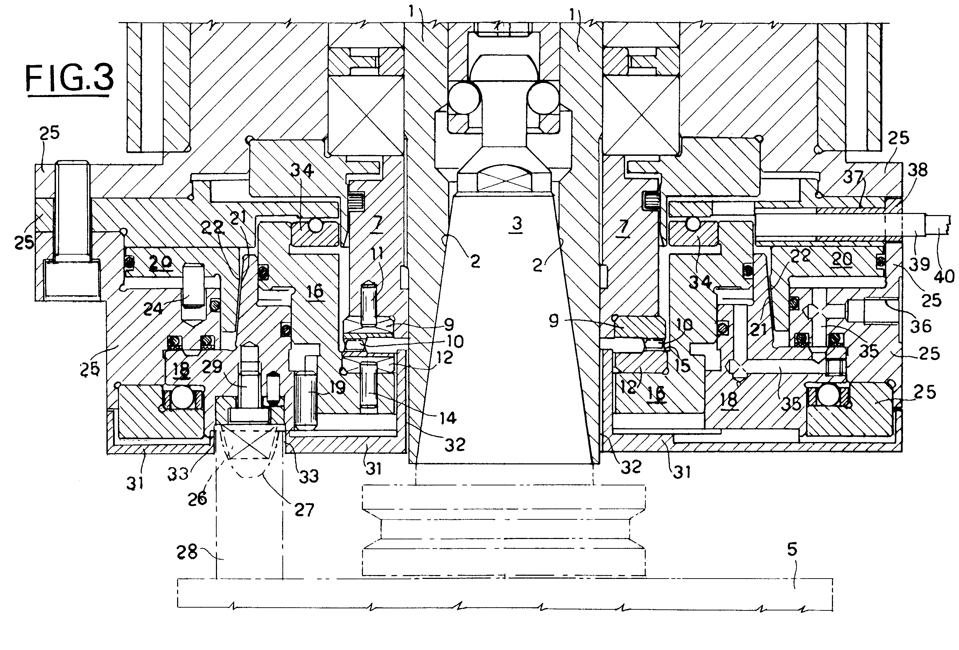

As shown in Figures 2 and 3, a sleeve 7 is also keyed on the shaft and rotates integrally with the shaft 1. A crown gear 9, with the front teeth 10 turned downwards (looking at the drawing), is attached to the sleeve 7 by means of screws 8 and pins 11.

A crown gear 12 similar to crown gear 9 and provided with front teeth 15, is attached, by means of screws 13 and pins 14, to a rotating and sliding sleeve 16 so that the teeth 15 are turned upwards (looking at the drawings). Springs 17 maintain the teeth of the two crown gears 9 and 12 disengaged, acting on the rotating and sliding sleeve 16 and on an axial-rolling bearing 34. Also fitted to the rotating sleeve 16 is a rotating ring 18 which, thanks to pins 19, can rotate integrally with the sleeve 16. The pins 19 also allow the relative axial sliding of the sleeve 16 in relation to the rotating ring 18.

An external ring 20 acts as a braking element for the rotating ring 18, thanks to the interference between the external surface 21 of the latter and the internal surface 22 of the external ring 20, both having a complementary conical configuration. This interference is guaranteed by the thrust exerted on the external ring 20 by springs 23. Pins 24 also make the external ring 20 integral with the static parts 25 of the assembly.

Also attached to the rotating ring 18, by means of a screw 29, is a projecting element 26, which is inserted in a cavity 27 of an eccentric shank 28 wherewith the toolholder headstock 5 is provided.

Again attached to the rotating ring 18, by means of screws 30, is a rotating disk 31 provided with a central hole 32 for the passage of the drive shaft 3 and a peripheral hole 33 for the passage of the shank 28.

As shown in Figure 3, a circuit 35 is formed in the elements making up the motor-driven assembly for the passage of a pressurised fluid, for example compressed air, coming from the outside through a hole 36 formed in the static parts 25. Housed in a second hole 37 is a bush 38 wherein an inductive sensor 39 is inserted for detecting the axial position of the rotating and sliding bush 16. An electric cable 40 carries the signal coming from said sensor 39 to an electronic control unit, not shown in the drawings.

In normal operating conditions, represented in Figure 2, the rotation of the drive shaft 1 is transmitted, via the tapered shaft 3, to the tool 4. The sleeve 7, integral with the shaft 1, rotates together with the crown gear 9.

The springs 17, maintaining the rotating and sliding sleeve 16 in the lower end-of-stroke point (looking at the drawings), prevent the crown gear 12 from engaging with the crown gear 9, and consequently the rotary motion of the shaft 1 is not transmitted to the sleeve 16. In this condition braking of the rotating ring 18 by the external ring 20 is also actuated, since the springs 23 ensure interference between their complementary conical surfaces 21 and 22.

Vice versa, when compressed air is fed through the hole 36 into the circuit 35, the thrust exerted by it on the rotating and sliding sleeve 16 overcomes the resistance of the springs 17 and displaces it to the upper end-of-stroke, point thus allowing engaging of the crown gear 12 on the crown gear 9, engaging which is communicated to the electronic unit by the inductive sensor 39. Similarly, immediately afterwards, the compressed air acts on the external ring 20 and, by overcoming the resistance of the springs 23 (stronger than the springs 17), pushes it upwards, thus releasing braking of the rotation of the rotating ring 18. The rotation of the shaft 1 is transmitted, through the sleeve 7 and the rotating and sliding sleeve 16, to the rotating ring 18 and, by the latter, through the shank 28, to the toolholder headstock 5. The latter can therefore rotate around its axis and achieve the required angular positioning. The electronic unit, by measuring the number of revolutions of the shaft 1 and receiving information, via another suitable sensor not shown and in itself known, on the angular position of "O" of the disk 31, can determine the current value of the angle of positioning of the headstock 5. When this value corresponds to the required value, the compressed air is discharged from the circuit 35 and the external ring 20, descending under the thrust of the springs 23, brakes the rotation of the rotating ring 18, and consequently that of the headstock 5. Immediately afterwards the rotating and sliding sleeve 16 is returned by the springs 17 into the lower end-of-stroke position, disengaging the crown gear 12 from the crown gear 9. In this way the required positioning of the latter can be achieved with satisfactory precision.

## Claims

1. Motor-driven movement and positioning assembly for toolholder headstocks, comprising a shaft (1), actuated by a respective motor, for transmission of rotary motion to a tool (4) mounted on said toolholder headstock (5), characterised in that it comprises a first assembly of mechanical elements (7,9), rotating integrally with said shaft (1), and a second assembly of mechanical elements (12,16,18), rotating integrally one with the other around the axis of rotation of the shaft (1), attached whereto is an eccentric shank (28) wherewith said headstock (5) is provided, the mechanical elements (7,9,12,16,18) of said first and second assembly being engageable mechanically one with the other, under the action of an actuator governed by a control unit, in order to exploit the rotary motion of the shaft (1) to transmit a circular motion to said shank (28) for angularly positioning said toolholder headstock (5), a braking element (20) also being provided and which can be engaged with the mechanical elements (12,16,18) of said second assembly in order to block the rotary motion of the mechanical elements (12,16,18) of said second assembly during their disengaging from the mechanical elements (7,9) of said first assembly.

2. Motor-driven assembly according to claim 1, characterised in that said first assembly (7,9) and second assembly (12,16,18) of mechanical elements each comprise a crown gear (9,12) which can be engaged with that of the other assembly.

3. Motor-driven assembly according to claim 2, characterised in that said second assembly of mechanical elements (12,16,18) comprises a sleeve (16) whereto said crown gear (12) is attached, and which rotates around the axis of said shaft (1) and slides along this axis between two limit positions of engaging and disengaging respectively of said crown gears (9,12) and a ring (18), rotating integrally with said sleeve (16), whereto the shank (28) is attached.

4. Motor-driven assembly according to claim 3, characterised in that said actuator consists of a compressed fluid fed, under the control of said unit, into a circuit (35) formed in the mechanical elements (12,16,18) of said second assembly and acting on said sleeve (16) to cause its axial sliding from the disengaged position to the engaged position of the two crown gears (9,12).

5. Motor-driven assembly according to claim 3, characterised in that said braking element (20) consists of a ring (20), provided with a conical surface (22) complementary with a conical surface (21) of said rotating ring (18), sliding along the axis of rotation of the shaft (1) between two limit positions of blocking and releasing respectively of the braking of said rotating ring (18), the braking action being exerted by interference of said complementary conical surfaces (21,22).

6. Motor-driven assembly according to claim 3, characterised in that it comprises a sensor (39) for detecting the axial position of said rotating and sliding sleeve (18).

7. Motor-driven assembly according to claim 6, characterised in that said sensor (39) is an inductive sensor (39) provided with an electric connection to said electronic control unit.
